Europäisches Patentamt

European Patent Office

Office européen des brevets

(19)

(11) **EP 1 043 632 A1**

(12) **DEMANDE DE BREVET EUROPEEN**

(43) Date de publication:
**11.10.2000 Bulletin 2000/41**

(51) Int Cl.$^7$: **G03H 1/08**

(21) Numéro de dépôt: **00400899.1**

(22) Date de dépôt: **31.03.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **06.04.1999 FR 9904259**

(71) Demandeur: **THOMSON-CSF**
**75008 Paris (FR)**

(72) Inventeurs:
• **Collot, Laurent, THOMSON-CSF Prop. Intell.**
**94117 Arcueil Cedex (FR)**

• **Le Clerc, Frédérique,**
**THOMSON-CSF Prop. Intell.**
**94117 Arcueil Cedex (FR)**
• **Gross, Michel, THOMSON-CSF Prop. Intell.**
**94117 Arcueil Cedex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(54) **Dispositif d'holographie numérique**

(57) L'invention concerne un dispositif d'holographie numérique, et s'applique par exemple à la cartographie tridimensionnelle des objets.

Le dispositif selon l'invention permet de déterminer l'amplitude complexe d'une onde signal (WS$_2$) issue d'un objet (DUT) éclairé par une onde d'illumination (WS$_1$) connue. Pour cela, Il comprend

- des moyens (LAS, AOM$_1$, AOM$_2$) de génération de deux ondes cohérentes entre elles, l'onde (WS$_1$) d'illumination de l'objet, et une onde de référence (WREF) connue, les deux ondes présentant une différence de phase connue $\phi_i(t)$ fonction du temps,

- des moyens (BS) pour faire interférer, sur des moyens de détection (DET), l'onde (WREF) de référence et l'onde signal (WS$_2$) issue de l'objet, les moyens de détection permettant un échantillonnage de la figure d'interférence résultant en l'acquisition d'un nombre N donné d'interférogrammes, N supérieur ou égal à 2, correspondant chacun à une différence de phase distincte entre l'onde signal et l'onde de référence incidentes sur les moyens de détection, l'amplitude complexe de l'onde signal étant alors déterminée à partir du traitement desdits inteférogrammes.

FIG.2

**Description**

L'invention concerne un dispositif d'holographie numérique, par exemple pour la cartographie tridimensionnelle des objets, et en particulier des objets en mouvement, notamment en vibration, ainsi que la mesure de composants optiques ou l'étude des milieux diffusants.

L'holographie classique, inventée par Dennis Gabor en 1948, s'est particulièrement développée dans les années 1960 avec l'apparition des lasers. C'est une méthode qui permet de reconstituer une image en trois dimensions d'un objet quelconque à partir d'un enregistrement effectué sur une plaque photographique, appelé hologramme, sans l'aide d'aucun objectif. Aujourd'hui, les applications de l'holographie classique sont nombreuses. L'image réelle en trois dimensions que l'on obtient lors de la restitution donne un effet de relief impressionnant. On peut obtenir ainsi de très beaux hologrammes d'objets d'art, même assez grands. Dans les sciences et l'industrie, l'interférométrie holographique permet l'étude des déformations de pièces variées, sous différentes actions, comme par exemple l'étude des écoulements de fluide en soufflerie aérodynamique.

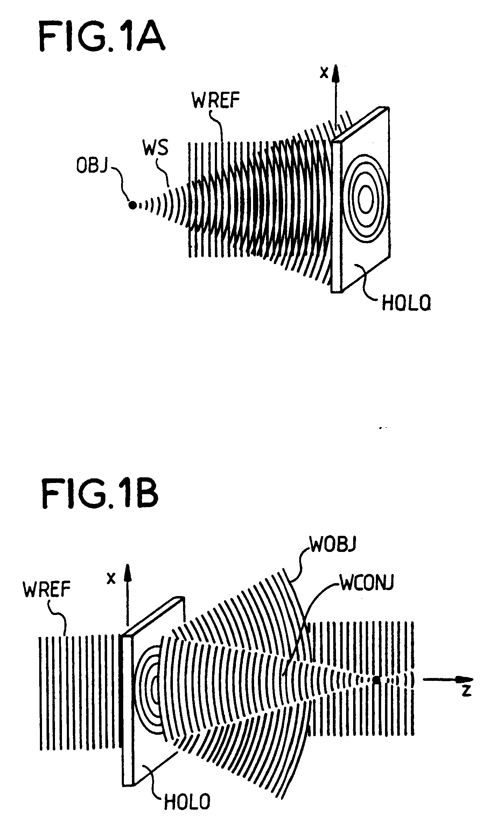

Les figures 1A et 1B montrent l'enregistrement et la restitution d'un hologramme classique d'un point source OBJ. Lors de l'enregistrement (figure 1A) on enregistre sur une plaque photographique HOLO les variations d'intensité dues aux interférences d'une onde de référence WREF, par exemple une onde plane, avec une onde cohérente WS diffusée par l'objet. Après développement selon les procédés ordinaires de la photographie, la plaque photographique constitue l'hologramme. Lors de la restitution (figure 1B), l'hologramme HOLO est éclairé par l'onde de référence WREF et produit deux ondes de lumière diffractée, une onde WOBJ qui reconstitue une image virtuelle de l'objet en trois dimensions et une onde conjuguée WCONJ qui forme une image réelle du point objet OBJ, image parasite que l'on veut éliminer. Une façon de séparer les ondes diffractées consiste alors à utiliser comme émulsion holographique un matériau épais. On réalise ainsi un hologramme dit de volume dans lequel les interférences se produisent dans toute l'épaisseur du matériau. A la restitution, la diffraction obéit à la condition de Bragg et seule l'onde objet est diffractée.

Cependant, si l'on peut reconstituer des images d'une excellente qualité, et ce, grâce à la résolution très importante des émulsions photographiques, on n'a pas d'accès direct aux informations enregistrées, ce qui limite les applications de l'holographie classique à des observations qualitatives. Il n'est pas possible par exemple d'établir une cartographie tridimensionnelle d'un objet ou d'avoir accès à des mesures quantitatives des paramètres photométriques. Pour pallier cet inconvénient, et obtenir des informations exploitables quantitativement, de nouvelles techniques d'holographie sont apparues, qui remplacent le film photographique par un détecteur optoélectronique bidimensionnel, par exemple une caméra CCD. Dans les dispositifs d'holographie numérique, on enregistre dans le plan du détecteur des interférences entre une onde de référence et une onde diffusée par l'objet (l'onde signal), ces deux ondes étant issues de la même source laser afin de respecter les conditions de cohérence. L'acquisition du signal d'interférence par le détecteur permet de numériser l'information et de déterminer des valeurs échantillonnées de la phase et de l'amplitude de l'onde diffusée. Ces données peuvent ensuite être exploitées pour obtenir des résultats quantitatifs sur l'objet.

Cependant, de la même façon qu'en holographie classique sur film mince, la figure de champ de l'onde signal calculée présente simultanément l'ordre souhaité, l'ordre zéro et un ordre conjugué parasite. Il y a donc une indétermination sur l'amplitude complexe de l'onde diffusée que l'on cherche à déterminer, ce qui se répercute sur la qualité des résultats obtenus par cette technique. Par exemple, on obtiendra une détermination inexacte de la cartographie de l'objet que l'on cherche à établir.

Le dispositif d'holographie numérique selon l'invention permet une détermination complète de l'amplitude complexe de l'onde diffusée par l'objet, extrêmement précise et qui s'adapte par ailleurs très bien à l'étude d'objets en vibration, par exemple.

Pour cela, l'invention concerne un dispositif permettant de déterminer l'amplitude complexe $A_S(\mathbf{r},z)$ d'une onde signal issue d'un objet éclairé par une onde d'illumination connue, le dispositif comprenant des moyens de détection optoélectronique et étant caractérisé en ce qu'il comporte en outre:

- des moyens de génération de deux ondes cohérentes entre elles, l'onde d'illumination de l'objet et une onde de référence connue, les deux ondes présentant une différence de phase connue $\phi_i(t)$ fonction du temps,
- des moyens pour faire interférer sur les moyens de détection l'onde de référence et l'onde signal issue de l'objet, les moyens de détection permettant un échantillonnage temporel de la figure d'interférence résultant en l'acquisition d'un nombre N donné d'interférogrammes $I_i(\mathbf{r},t)$, N supérieur ou égal à 2, correspondant chacun à une différence de phase distincte entre l'onde signal et l'onde de référence incidentes sur les moyens de détection,
- des moyens de traitement permettant, à partir desdits inteférogrammes, de déterminer un hologramme numérique de l'objet correspondant à l'expression dans un plan $\Pi(z)$ donné de l'amplitude complexe $A_S(\mathbf{r},z)$ de l'onde signal issue de l'objet.

Les avantages et caractéristiques de l'invention apparaîtront à la lecture de la description qui suit, illustrée par les figures annexées qui représentent:

- les figures 1A et 1B, des schémas illustrant l'enregistrement et la restitution d'un hologramme classique (déjà commentées);
- la figure 2, un schéma illustrant un exemple de dispositif selon l'invention;
- les figures 3A et 3B des diagrammes représentant en fonction du temps la valeur de la différence de phase selon deux exemples ;
- la figure 4, un schéma illustrant des moyens du dispositif, selon une variante ;
- la figure 5, un schéma illustrant un autre exemple de réalisation du dispositif selon l'invention.

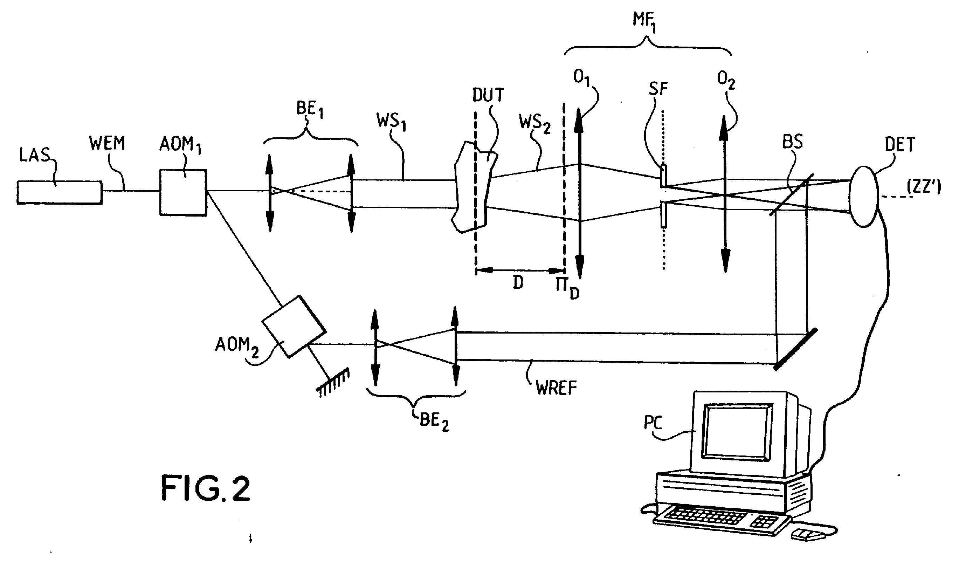

La figure 2 représente un schéma d'un premier exemple de dispositif d'holographie numérique selon l'invention. On cherche à déterminer l'amplitude complexe $A_s(\mathbf{r},z)$ de l'onde signal $WS_2$ issue de l'objet DUT lorsque celui-ci est éclairé par une onde d'illumination $WS_1$ connue, d'axe (zz') donné, par exemple une onde plane. On appelle ici hologramme numérique de l'objet l'expression de l'amplitude complexe $A_s(\mathbf{r},z)$ dans un plan n(z) donné, perpendiculaire à l'axe (zz') de l'onde d'illumination de l'objet, où z est la coordonnée du plan $\Pi(z)$ sur l'axe zz', pris par rapport à une référence arbitraire, et $\mathbf{r}$ est le vecteur position d'un point se trouvant dans ledit plan. L'objet DUT est par exemple un objet diffusant dont on cherche à établir une cartographie, une image en surface ou en volume, ou un système optique dont on cherche à mesurer les aberrations. Contrairement aux dispositifs de l'art antérieur, la détermination de l'amplitude complexe de l'onde signal se fait sans ambiguïté sur la valeur de la phase, et s'applique particulièrement bien à l'étude d'objets en vibration.

Pour cela, le dispositif selon l'invention comprend des moyens de génération de deux ondes cohérentes entre elles, l'onde d'illumination de l'objet et une onde de référence, les deux ondes présentant une différence de phase connue $\phi_i(t)$ fonction du temps (t). Avantageusement, les moyens de génération du dispositif selon l'invention comprennent une source cohérente LAS, par exemple une source laser, émettant une onde d'émission WEM, et deux modulateurs acousto-optiques, $AOM_1$ et $AOM_2$, travaillant à des fréquences prédéterminées sur des ordres de diffraction opposés, afin de former, à partir de l'onde d'émission WEM, l'onde $WS_1$ d'illumination de l'objet et l'onde de référence WREF avec la différence de phase entre les deux ondes $\phi_i(t)$. L'utilisation de modulateurs acousto-optiques permet notamment une très grande précision dans l'établissement de la différence de phase $\phi_i(t)$. Selon une autre variante, l'onde d'illumination et l'onde de référence peuvent être constituées de deux sources laser indépendantes qui sont verrouillées en phase par un asservissement électronique. Des exemples de mise en oeuvre du déphasage entre les ondes seront vus plus en détails dans la suite.

Le dispositif comprend d'autre part des moyens BS, par exemple une lame séparatrice dans le cas de la figure 2, pour faire interférer sur des moyens de détection DET l'onde WREF de référence et l'onde signal $WS_2$ issue de l'objet. Les moyens de détection DET sont dans cet exemple formés d'un détecteur mono-élément, déplacé mécaniquement, ou, de manière avantageuse, d'un ensemble de détecteurs élémentaire, répartis linéairement ou sous forme d'une matrice, et permettant l'acquisition d'image à une cadence $f_{im}$ prédéterminée, et avec un temps d'intégration $T_{int}$ donné. Le détecteur est par exemple, comme cela est représenté sur la figure 2, une caméra CCD matricielle dont la surface sensible est sensiblement normale à l'axe (zz') de l'onde d'illumination.

Selon l'invention, les moyens de détection permettent un échantillonnage temporel de la figure d'interférence résultant en l'acquisition d'un nombre N donné d'interférogrammes $I_i(\mathbf{r},t)$, N supérieur ou égal à 2, correspondant chacun à une différence de phase distincte entre l'onde signal et l'onde de référence incidentes sur les moyens de détection. Dans la pratique, on pourra prendre avantageusement N supérieur ou égal à 3 si l'on souhaite annuler, par le calcul, les biais de mesure introduits par le détecteur. Dans l'exemple de la figure 2 dans lequel est utilisé un détecteur présentant un temps d'intégration $T_{int}$, par exemple une caméra CCD, l'interférogramme $I_i(\mathbf{r},t)$ est moyenné pendant le temps d'intégration, résultant en un interférogramme moyenné $I_i(\mathbf{r})$ dont l'expression est donnée par:

$$I_i(\mathbf{r}) = \frac{1}{T_{int}} \int_{t_i}^{t_i+T_{int}} I_i(\mathbf{r},t)dt$$

où $t_i$ est l'instant d'acquisition de l'interférogramme d'indice i. Chaque interférogramme moyenné $I_i(\mathbf{r})$ correspond à une valeur de la différence de phase $\phi_i$ à l'instant d'acquisition $t_i$. Le dispositif comprend en outre des moyens de traitement permettant, à partir des interférogrammes moyennés, de déterminer un hologramme numérique de l'objet correspondant à l'expression dans un plan $\Pi(z)$ donné, de l'amplitude complexe $A_s(\mathbf{r},z)$ de l'onde signal issue de l'objet. Dans l'exemple de la figure 2, les calculs sont par exemple effectués au moyen d'un micro-ordinateur PC suffisamment rapide pour réaliser les calculs en temps réel. Connaissant l'amplitude complexe $(A_s(\mathbf{r},z_0))$ de l'onde signal dans le plan du détecteur, il est alors possible de déterminer par une opération classique de propagation, l'amplitude complexe $(A_s(\mathbf{r},z))$ de l'onde signal en tout point de l'espace libre compris entre l'objet et le détecteur.

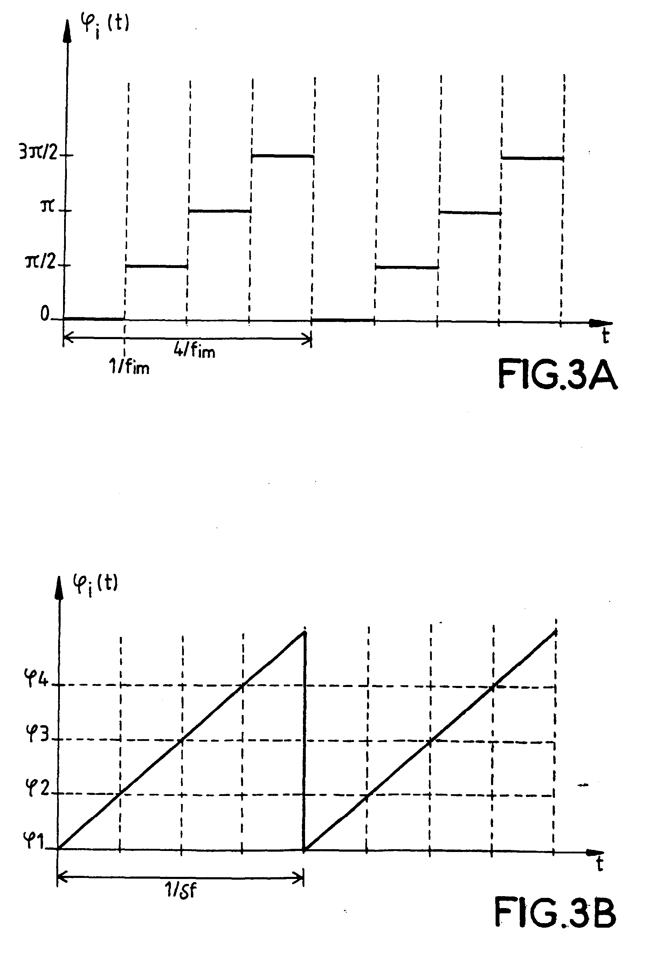

Selon une variante, la différence de phase $\phi_i(t)$ est variable par palier en fonction du temps, périodique, et prend successivement pendant une période égale au rapport $N/f_{im}$, N valeurs distinctes. Cette variante est illustrée par la figure 3A, sur laquelle est représentée la valeur de la différence de phase en fonction du temps. Dans ce cas, N est égal à quatre et la différence de phase prend quatre valeurs distinctes égales à 0, $\pi/2$, $\pi$, $3\pi/2$, pendant des durées sensiblement égales à $1/f_{im}$.

Selon une variante préférentielle, les ondes de référence WREF et d'illumination $WS_1$ présentent un décalage en fréquence $F_0$, l'interférence entre l'onde de référence WREF et l'onde signal $WS_2$ issue de l'objet résultant en un interférogramme $I(\mathbf{r},t)$ modulé en fonction du temps, présentant une modulation sinusoïdale à ladite fréquence $F_0$. En effet, cette variante permet notamment, comme cela est expliqué dans la suite, l'étude d'objets en vibration, en ajustant la fréquence de décalage $F_0$ entre les deux ondes.

Par exemple, dans le cas de l'étude d'un objet sensiblement immobile, la fréquence de décalage est sensiblement égal au rapport $\delta f=f_{im}/N$ entre la fréquence d'acquisition $f_{im}$ du détecteur et le nombre N. Ce rapport est, dans le cas d'une caméra video par exemple, un rapport en fréquence de faible valeur (typiquement une dizaine de Hz). Dans ce cas, l'interférogramme $I(\mathbf{r},t)$ présente en fonction du temps une modulation sinusoïdale à ladite fréquence $\delta f$ et la différence de phase entre les deux ondes est linéaire par intervalles en fonction du temps, passant de 0 à $2\pi$ sur un intervalle de temps égal à $1/\delta f$, comme cela est représenté sur la figure 3B. En synchronisant par exemple l'acquisition du détecteur avec la fréquence de modulation de l'interférogramme $I(\mathbf{r},t)$, on obtient une séquence de N interférogrammes moyennés $I_i(\mathbf{r})$ correspondant à N valeurs $\phi_i$ de la différence de phase moyennée pendant le temps d'intégration du détecteur. Sur la figure 3B, N est égal à quatre et on a noté respectivement $\phi_1$, $\phi_2$, $\phi_3$, $\phi_4$ les quatre valeurs de la différence de phase moyennée.

Le dispositif selon l'invention permet également l'étude d'objets en vibration, grâce par exemple à l'utilisation de modulateurs acousto-optique, dont un exemple de mise en oeuvre sera détaillé par la suite. L'objet, présentant au moins une fréquence de vibration $f_v$, est par exemple illuminé en réflexion. La fréquence de décalage $F_0$ entre l'onde de référence WREF et l'onde d'illumination $WS_1$ est alors ajustée sensiblement à la somme entre la fréquence de vibration $f_v$ , ou l'une de ses harmoniques $f'_v$ égale au produit $M.f_v$, de ladite fréquence de vibration avec un entier relatif M = 0, 1, -1, 2, -2, etc., et le rapport $\delta f$ entre la cadence d'acquisition $f_{im}$ et le nombre N d'interférogrammes (typiquement N=4), soit :

$$F_0 = M.f_v + \delta f$$

Avantageusement, les décalages de fréquence des modulateurs acousto-optiques correspondant à des fréquences synthétisées, programmables au moyen d'un synthétiseur numérique, il est possible grâce au dispositif selon l'invention, d'effectuer des mesures sur tout le spectre de vibration de l'objet en faisant varier la fréquence de décalage $F_0$, de manière à correspondre à la fréquence fondamentale de la vibration $f_v$ explorée et au rang harmonique M choisi.

Le dispositif selon l'invention permet ainsi une démodulation numérique de l'interférogramme $I_i(\mathbf{r},t)$ à une fréquence de démodulation dont l'ordre de grandeur est celui de la cadence d'acquisition du détecteur. Par exemple, la fréquence de démodulation est sensiblement égale au rapport $f_{im}/N$.

Dans certains cas, par exemple dans le cas d'un objet en déplacement, l'interférogramme peut présenter des modulations temporelles à des fréquences autres que la différence de fréquence induite par la modulation de phase $\phi_i(t)$. Dans ce cas, on choisira une fréquence de démodulation adaptée.

Voyons de façon plus précise comment le dispositif selon l'invention et tel qu'il est décrit dans l'exemple de la figure 2 permet de déterminer dans le plan du détecteur l'amplitude complexe $A_s(\mathbf{r},z_0)$ de l'onde issue de l'objet à partir des N interférogrammes. On considère par exemple le cas dans lequel l'onde de référence présente par rapport à l'onde d'illumination un décalage en fréquence $F_0$ sensiblement égal au rapport $\delta f$. Les champs $E_s(\mathbf{r},t)$ et $E_0(\mathbf{r},t)$ des ondes signal $WS_2$ et de référence WREF s'écrivent, en fonction du temps t et du vecteur position $\mathbf{r}$:

$$E_s(\mathbf{r},z_0,t) = A_s(\mathbf{r},z_0)\exp(i2\pi f_s t)$$
$$E_0(\mathbf{r},z_0,t) = A_0(\mathbf{r},z_0)\exp(i2\pi f_0 t) \tag{1}$$

où $f_s$ est la fréquence de l'onde signal et $f_0$ est la fréquence de l'onde de référence, avec $f_0=f_s+\delta f$. $A_s(\mathbf{r},z_0)$ et $A_0(\mathbf{r},z_0)$ sont les amplitudes complexes respectivement de l'onde signal $WS_2$ et de l'onde de référence WREF dans le plan du détecteur.

Après interférence de l'onde signal et de l'onde de référence, l'interférogramme $I(\mathbf{r},t)$ obtenu par les moyens de détection DET s'écrit:

$$I(r,t) = \eta(E_s(r,z_0,t) + E_0(r,z_0,t)).(E^*_s(r,z_0,t) + E^*_0(r,z_0,t)) \tag{2}$$

où $\eta$ est l'efficacité quantique du détecteur.

Ainsi, si l'on décompose l'onde signal $WS_2$ incidente sur le détecteur en une superposition d'onde planes élémentaires, et pour une onde de référence WREF plane et de phase constante $\Phi_0$, la composante de l'interférogramme correspondant à une onde plane élémentaire de l'onde signal s'écrit:

$$I(\mathbf{r},t) = \eta|\mathbf{A_0}|2\Re\left[\mathbf{A_s}(\mathbf{r})\exp(-i\Phi_0)\exp\left[i(\mathbf{k_s} - \mathbf{k_0}).\mathbf{r} + 2\pi\delta f.t\right]\right] \tag{3}$$

où $\mathbf{k}_s$ et $\mathbf{k}_0$ sont les vecteurs d'onde respectivement de l'onde signal élémentaire et de l'onde de référence. Notons que ce type de détection permet la mesure de l'amplitude complexe de l'onde signal dans le mode de l'onde de référence. Ainsi, si l'onde de référence est polarisée linéairement, le champ signal sera mesuré suivant cette polarisation.

D'après l'expression (3), il ressort que l'interférogramme $I(\mathbf{r},t)$ est modulé à la fois spatialement et temporellement. Pour obtenir une information exploitable, il est nécessaire que la densité des franges correspondant à la modulation spatiale du signal d'interférence ne dépasse pas la résolution du détecteur matriciel constitué de détecteurs élémentaires (condition dite d' 'anti-aliasing' selon l'expression anglo-saxonne). L'onde signal $WS_2$ incidente sur le détecteur étant décomposée en une somme d'ondes planes élémentaires de vecteurs d'onde $\mathbf{k}_s$, la région $S_{k0}$ de l'espace des vecteurs d'onde remplissant la condition d'anti-aliasing pour une onde de référence plane, de vecteur d'onde $\mathbf{k}_0$, est définie par:

$$S_{k0} = \text{sinc}(d_x.(k_x-k_{x0})).\text{sinc}(d_y.(k_y-k_{y0})) \geq 1-e_A \tag{4}$$

où $e_A$ est un facteur d'extinction quantifiant la perte de contraste des franges liées à l'intégration spatiale du détecteur, $(k_x,k_y)$ et $(k_{x0},k_{y0})$ sont respectivement les composantes des vecteurs d'onde $\mathbf{k}_s$ et $\mathbf{k}_0$ selon les axes orthogonaux x et y du plan du détecteur qui définissent les directions des côtés des détecteurs élémentaires supposés sensiblement rectangulaires, et dont les dimensions sont respectivement $d_x$ et $d_y$.

La condition (4) permet ainsi de définir un ensemble de vecteurs $\mathbf{k}_s$ qui remplissent la condition d'anti-aliasing, pour une résolution donnée définie par les dimensions des détecteurs élémentaires du détecteur. Ainsi, selon la précision recherchée, la mesure doit être limitée à un champ angulaire élémentaire de l'onde signal $WS_2$ incidente sur le détecteur, correspondant à un cône d'angles $\alpha_x$, $\alpha_y$ autour de la direction du vecteur d'onde $\mathbf{k}_0$ de l'onde de référence incidente sur le détecteur. Les dimensions $\alpha_x$ et $\alpha_y$ de ce champ angulaire élémentaire doivent être sensiblement inférieures ou égales à $\lambda/2.d_x$ et $\lambda/2.d_y$ respectivement pour respecter la condition (4).

Ainsi, lorsque par exemple l'objet DUT est diffusant, et l'onde signal issue de l'objet décomposée en une superposition d'ondes planes élémentaires de vecteurs d'onde $\mathbf{k}_s$, une partie seulement des vecteurs d'onde respectent la condition d'anti-aliasing. Aussi le dispositif d'holographie numérique selon l'invention peut-il comprendre des moyens de filtrage permettant de limiter la direction des vecteurs d'onde $\mathbf{k}_s$ des ondes incidentes sur le détecteur autour de celle du vecteur $\mathbf{k}_0$ afin de respecter strictement la condition d'anti-aliasing. De tels moyens seront décrits par la suite.

Lorsque la condition d'anti-aliasing donnée par l'équation (4) est respectée, les moyens de calcul du dispositif selon l'invention permettent de déterminer la restriction de l'hologramme de l'objet DUT au cône d'ouvertures $\alpha_x$, $\alpha_y$ à partir de la démodulation des interférogrammes $I_i(\mathbf{r},t)$ à la fréquence $\delta f$ pour chaque détecteur élémentaire. Par exemple, pour N=4, la partie en phase avec l'onde de référence de l'amplitude complexe $A_s(\mathbf{r},z_0)$ peut être déterminée à partir de la différence $I_3(\mathbf{r})-I_1(\mathbf{r})$ où $I_1(\mathbf{r})$ et $I_3(\mathbf{r})$ sont les interférogrammes moyennés obtenus en remplaçant dans l'expression (3) l'expression $2\pi\delta ft$ respectivement par 0 et $\pi$, et la partie en quadrature de l'amplitude complexe $A_s(\mathbf{r},z_0)$ peut être déterminée à partir de la différence $I_4(\mathbf{r})-I_2(\mathbf{r})$ où $I_2(\mathbf{r})$ et $I_4(\mathbf{r})$ sont obtenus en remplaçant dans l'expression (3) l'expression $2\pi\delta ft$ respectivement par $\pi/2$ et $3\pi/2$. Ces interférogrammes sont par exemple obtenus en ajustant la fréquence de décalage $\delta f$ de telle sorte que cette fréquence soit sensiblement égale au quart de la fréquence d'acquisition $f_{im}$ du détecteur.

Ce calcul montre comment, au moyen du dispositif selon l'invention, on obtient une mesure échantillonnée de l'amplitude complexe de l'onde signal issue de l'objet, sur toute la surface du détecteur. Cette mesure est obtenue, selon une mise en oeuvre particulière du dispositif, par différence entre des images faites par le même détecteur, à des instants différents, ce qui minimise les biais de mesure éventuels.

Nous décrivons maintenant plus précisément et selon un exemple de réalisation, les moyens de mise en oeuvre du dispositif selon l'invention, dans l'exemple de la figure 2.

La source LAS est par exemple un laser Helium-Neon continu de quelques milliwatts. Le détecteur est une caméra CCD présentant une fréquence d'acquisition $f_{Im}$ de 25 Hz et comportant 752x582 détecteurs élémentaires de dimensions $d_x$ = 10.6 µm et $d_y$ = 8.6 µm. Le laser émet une onde d'émission qui va permettre de générer l'onde $WS_1$ d'illumination de l'objet et l'onde de référence WREF. Avantageusement, ces ondes sont formées au moyen de deux modulateurs acousto-optiques $AOM_1$ et $AOM_2$ travaillant sur des ordres de diffraction opposés, respectivement à $\Delta f + F_0$ et $\Delta f$, avec typiquement $\Delta f$=80 Mhz et, dans le cas par exemple d'un objet immobile, $F_0$ = $\delta f$ soit 6,25 Hz pour N = 4. Ce montage permet de générer le décalage basse fréquence nécessaire à l'utilisation d'une caméra video. Dans le cas de l'étude d'un objet en vibration à une fréquence $f_v$, par exemple de l'ordre de 100 kHz, $F_0$ peut être ajusté à $f_v$ + $\delta f$. Là encore, grâce à l'utilisation des deux modulateurs acousto-optiques, la fréquence de vibration $f_v$ de l'objet étudié peut varier des très basses fréquences jusqu'à plusieurs GHz.

Ainsi, le premier modulateur acousto-optique ($AOM_1$) intercepte l'onde d'émission WEM, transmet une partie de l'onde d'émission pour former l'onde d'illumination ($WS_1$) de l'objet et génère dans une direction donnée, une première onde décalée en fréquence par rapport à l'onde d'émission, d'une première variation de fréquence prédéterminée $\Delta f_1$, par exemple 80 MHz + 6,25 Hz. Le deuxième modulateur acousto-optique $AOM_2$ intercepte la première onde décalée en fréquence et génère une deuxième onde décalée en fréquence par rapport à la première onde, d'une deuxième variation de fréquence $\Delta f_2$ égale à la différence $F_0 - \Delta f_1$, soit -80 MHz. L'onde résultante forme l'onde de référence WREF et présente alors par rapport à l'onde d'illumination de l'objet un décalage en fréquence égal à la fréquence de décalage Fo, soit dans cet exemple 6,25 Hz. Ainsi, à la fréquence d'acquisition de la caméra CCD (25 Hz, dans cet exemple), on enregistre successivement des images $I_1(\mathbf{r})$, $I_2(\mathbf{r})$, $I_3(\mathbf{r})$, $I_4(\mathbf{r})$ correspondant à des valeurs de la différence de phase entre l'onde d'illumination de l'objet et l'onde de référence égales respectivement à 0, $\pi/2$, $\pi$, $3\pi/2$. Les modulateurs acousto-optiques, simples à mettre en oeuvre, présentent en outre la possibilité d'envoyer la plus grande partie de l'énergie dans l'ordre 1 ou -1.

Dans le cas où l'onde de référence et l'onde d'illumination de l'objet présentent un décalage en fréquence $F_0$, les modulateurs acousto-optiques peuvent, dans certaines applications, être remplacés par des modulateurs électro-optiques qui modulent la phase ou par une modulation de la puissance du laser d'émission, permettant de générer un peigne de bandes latérales en fréquences associées à cette modulation. Ces bandes latérales contiennent des fréquences égales à la fréquence de modulation et à ses harmoniques.

Dans le cas où le déphasage $\phi_i(t)$ est variable par palier en fonction du temps, ce déphasage peut être périodique, prenant successivement N valeurs distinctes, dans cet exemple quatre, sensiblement à la fréquence d'acquisition $f_{Im}$ du détecteur. Ce déphasage peut être obtenu avec des moyens similaires à ceux que l'on a décrit précédemment, à savoir la mise en oeuvre de deux modulateurs acousto-optiques $AOM_1$ et $AOM_2$ utilisés sur des ordres de diffraction de signes opposés et fonctionnant à la même radiofréquence mais dont on contrôle électriquement la différence de phase. La différence de phase par palier peut également être obtenue par des techniques classiques de l'homme de l'art, par exemple au moyen d'une ligne à retard optique entre les deux voies. Cependant, l'utilisation des modulateurs acousto-optiques permet une très bonne précision dans l'établissement de la phase.

Les ondes d'illumination et de référence peuvent être étendues au moyen de dispositifs afocaux (respectivement $BE_1$ et $BE_2$ sur la figure 2), de telle sorte que l'onde d'illumination $WS_1$ éclaire l'objet DUT dans sa partie que l'on cherche à analyser et que l'onde de référence WREF recouvre la surface sensible du détecteur DET. Les moyens pour faire interférer l'onde signal $WS_2$ issue de l'objet DUT lorsque celui-ci est éclairé par l'onde d'illumination $WS_1$ et l'onde de référence sont par exemple une lame séparatrice BS qui combine les deux ondes sur la surface du détecteur.

Dans l'exemple de réalisation de la figure 2, sont également prévus des moyens de filtrage $MF_1$, permettant d'éviter les effets d'aliasing précédemment décrits. Selon un exemple, les moyens de filtrage MF1 sont positionnés entre l'objet DUT et la lame séparatrice BS, et comprennent deux objectifs ($O_1$, $O_2$) d'axes parallèles ou confondus formant un système afocal, avec, entre les deux objectifs, un plan focal intermédiaire PFI. Les moyens $MF_1$ comprennent en outre un trou de filtrage SF positionné dans le plan PFI et pouvant être déplacé dans ce plan.

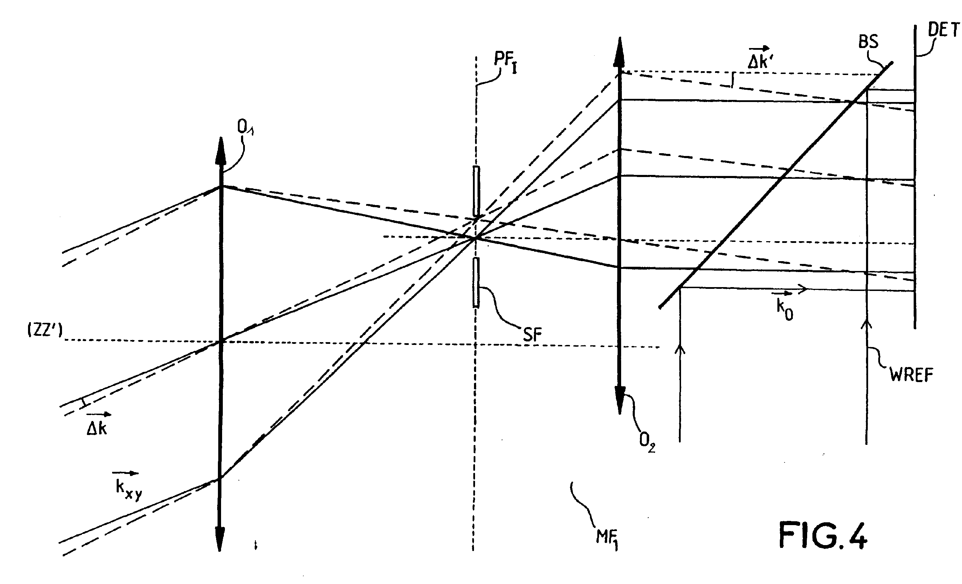

La figure 4 représente plus précisément les moyens de filtrage mis en oeuvre dans l'exemple de la figure 2. Le premier objectif, $O_1$, positionné en regard de l'objet DUT est toujours fixe; il permet par une transformation optique d'avoir accès, en son plan focal, aux composantes des vecteurs d'onde $\mathbf{k}_s$ des ondes planes élémentaires composant l'onde $WS_2$ issue de l'objet. Le trou SF permet de sélectionner, autour d'une direction donnée de l'onde signal incidente sur les moyens de filtrage, définie par la position du trou SF dans le plan PFI, et correspondant à un vecteur d'onde $\mathbf{k}_{xy}$ donné, les directions de l'onde signal incidente correspondant à des vecteurs d'onde $\mathbf{k}_s$ dans une ouverture donnée. Le second objectif, $O_2$, en regard du détecteur DET, est selon cet exemple centré sur le trou SF, de telle sorte qu'en sortie des moyens de filtrage, les directions de l'onde signal soient contenues dans une ouverture centrée sur une direction parallèle à celle du vecteur d'onde $\mathbf{k}_0$ de l'onde de référence incidente sur le détecteur DET. Comme cela a été expliqué précédemment, la forme et les dimensions du trou SF sont choisies en fonction de la géométrie des détecteurs élémentaires afin de respecter la condition anti-aliasing donné par l'équation (4). Plus précisément, on prend comme référence les dimensions $d'_x$ et $d'_y$, appelées ici dimensions équivalentes, qui sont les dimensions les plus grandes entre les dimensions effectives des détecteurs élémentaires et les dimensions effectives des éléments d'image échantillonnée.

Ainsi, le trou SF est dans cet exemple un trou de forme rectangulaire et dont les dimensions selon les axes x et y sont respectivement inférieures ou égales à

$$2\tan\left(\frac{\lambda}{2d'_x}\right)f_2$$

et

$$2\tan\left(\frac{\lambda}{2d'_y}\right)f_2 ,$$

où $\lambda$ est la longueur d'onde et $f_2$ est la distance focale du second objectif $O_2$. Selon le type de détecteur utilisé et la forme des détecteurs élémentaires, la forme du trou de filtrage SF sera adapté.

Comme nous l'avons expliqué précédemment, la condition d'anti-aliasing est valable dans le plan du détecteur et limite le champ sortant des moyens de filtrage $MF_1$ à un champ élémentaire centré autour de la direction du vecteur d'onde $\mathbf{k}_0$ de l'onde de référence incidente sur la caméra. Si l'on rapporte la condition d'anti-aliasing au champ incident sur les moyens de filtrage, en prenant en compte le grandissement du dispositif afocal formant les moyens $MF_1$, on obtient une limitation sur le champ angulaire de l'onde signal $WS_2$ incidente sur les moyens de filtrage $MF_1$. L'hologramme numérique ainsi obtenu est un hologramme numérique élémentaire correspondant à un champ angulaire élémentaire de l'onde signal $WS_2$ issue de l'objet.

Selon l'invention, le dispositif d'holographie numérique peut comporter en outre des moyens permettant de balayer un ensemble de champs angulaires élémentaires, résultant en un ensemble d'hologrammes numériques élémentaires et dont la combinaison permet d'obtenir un hologramme numérique grand champ de l'objet DUT. L'hologramme numérique grand champ correspond ici à l'amplitude complexe $A_s(x,y,z=z_D)$ de l'onde signal issue de l'objet, mesurée dans un plan positionné en amont des moyens de filtrage $MF_1$ et noté $\Pi_D$ sur la figure 2. Pour cela, on peut par exemple déplacer solidairement, dans un plan perpendiculaire à la direction des axes des objectifs $O_1$ et $O_2$, le trou SF, le second objectif $O_2$ et le détecteur DET, de telle sorte à sélectionner différentes parties du champ.

D'autre part, le champ angulaire élémentaire étant fixé, le dispositif selon l'invention peut comporter en outre des moyens permettant d'opérer une rotation apparente de l'objet DUT autour de la direction normale au plan du détecteur DET, soit par rotation effective de l'objet soit par utilisation d'une parallaxe, chaque position apparente de l'objet résultant également en un hologramme numérique élémentaire. La combinaison des hologrammes élémentaires permet d'obtenir un hologramme numérique grande résolution de l'objet DUT.

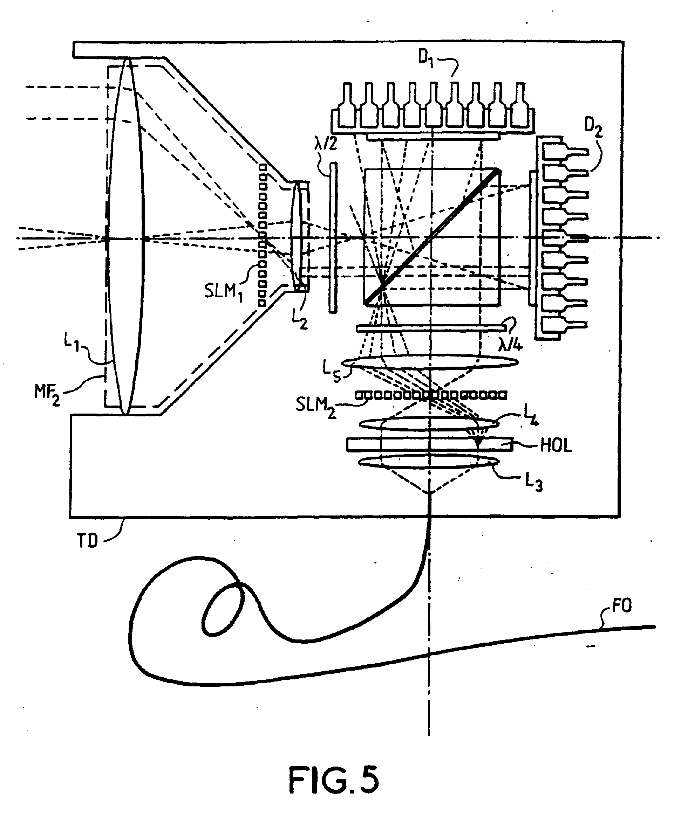

La figure 5 illustre un autre exemple de réalisation du dispositif selon l'invention. Dans cet exemple, les ondes de référence et d'illumination présentent un décalage en fréquence $F_0$. Les moyens de détection sont tels qu'ils permettent une détection synchrone par exemple à une fréquence sensiblement égale à la fréquence de décalage $F_0$, des interférogrammes $I_i(\mathbf{r},t)$. D'autre part, les moyens de traitement permettant de déterminer l'hologramme numérique de l'objet sont directement assurés par l'électronique des moyens de détection.

Dans l'exemple de la figure 5, on démodule sur deux détecteurs distinctes $D_1$ et $D_2$ les deux quadratures de l'amplitude complexe que l'on cherche à déterminer. Les moyens de génération de l'onde d'illumination de l'objet et de l'onde de référence, cohérentes entre elles, sont réalisés de façon similaire aux exemples décrits précédemment. Ces moyens, ainsi que l'objet dont on cherche à faire l'hologramme numérique, ne sont pas représentés sur la figure 5. Les moyens pour faire interférer l'onde signal issu de l'objet avec l'onde de référence ainsi que les moyens de détection comprenant les deux détecteurs D1 et D2 sont compris dans une tête de détection TD. La tête de détection comprend aussi selon une variante des moyens de filtrage permettant de satisfaire la condition d'anti-aliasing telle qu'elle a été décrite précédemment.

Dans l'exemple de la figure 5, la tête de détection TD comprend ainsi un dispositif de filtrage $MF_2$ représentant un mode de réalisation différent de celui décrit dans la figure 2. Le dispositif MF2 comprend deux objectifs $L_1$ et $L_2$ formant un dispositif afocal similaire au système formé par $O_1$ et $O_2$ et décrit sur les figures 2 et 4. L'onde signal issue de l'objet est incidente sur l'objectif $L_1$. Le trou de filtrage SF du dispositif des figures 2 et 4 est remplacé ici par un modulateur spatial de lumière $SLM_1$, comme par exemple une valve optique adressée spatialement. Ainsi, on peut sélectionner la taille de l'ouverture en fonction de la précision recherchée et sélectionner le champ visé, sans la contrainte d'un déplacement mécanique. L'onde signal ainsi filtrée traverse une lame demi-onde, notée $\lambda/2$ sur la figure 5, orientée à 22,5°, puis est envoyée vers un cube séparateur de polarisation CSP, de manière à équirépartir l'onde signal à détecter sur les deux détecteurs $D_1$ et $D_2$, en assurant l'égalité des phases.

L'onde de référence est injectée dans la tête de détection par exemple par une fibre optique FO. Elle est collimatée au moyen d'un objectif $L_3$ puis traverse un composant holographique HOL multi-ordres permettant de former de façon contrôlée une onde composée d'un ensemble d'ondes planes élémentaires de vecteurs d'onde connus, dirigées vers les centres des obturations élémentaires d'un second modulateur spatial de lumière $SLM_2$, par exemple une valve optique. Le modulateur $SLM_2$ est positionné dans le plan focal intermédiaire d'un dispositif afocal $(L_4, L_5)$. Il permet de sélectionner la direction du vecteur d'onde de l'onde plane élémentaire de référence colinéaire à la visée instantanée de l'équipement. Celle-ci traverse alors une lame quart d'onde $(\lambda/4)$, permettant au moyen du cube séparateur CSP de distribuer en quadrature l'onde de référence sur les deux détecteurs $D_1$ et $D_2$. Par exemple, l'onde de référence étant polarisée rectilignement, la lame quart d'onde transforme la polarisation rectiligne en une polarisation circulaire puis est interceptée par le cube séparateur de polarisation. Le cube CSP sépare l'onde de référence circulaire en une onde polarisée linéairement, parallèlement à l'onde signal, incidente par exemple la détecteur $D_1$ et en une onde de référence polarisée linéairement, de polarisation perpendiculaire à l'onde signal, incidente sur le détecteur $D_2$.

Les moyens de détection sont dans cet exemple formés d'une matrice de détecteurs rapides, de type photodiodes, suivis d'une électronique permettant la démodulation du photocourant pour chaque détecteur, sensiblement à la différence de fréquence entre l'onde signal et l'onde de référence. Ainsi, dans cet exemple de réalisation, les deux quadratures de l'amplitude complexe de l'onde signal sont séparées avant démodulation grâce aux deux détecteurs $D_1$ et $D_2$. D'autre part, la démodulation est assurée par le circuit électronique plutôt que par le traitement numérique, comme c'était le cas dans l'exemple de la figure 2. Ainsi, ce mode de réalisation présente l'avantage par rapport à l'exemple de la figure 2, de permettre une différence de fréquence entre l'onde signal et l'onde de référence qui est limitée par la technologie utilisée dans le circuit électronique (soit typiquement entre 100 kHz et 10 MHz), et non plus par la cadence d'image $f_{im}$ de la caméra CCD (typiquement quelques dizaines de Hz). Dans chaque application, on choisit , comme dans le cas de l'exemple de la figure 2, la forme de modulation de la phase entre l'onde signal et l'onde de référence et la fréquence de démodulation adaptée à l'application.

Dans l'exemple de la figure 5, on a choisi de démoduler sur deux détecteurs distincts, les deux quadratures. Notons que si la technologie du détecteur le permet, cette double démodulation pourrait être intégrée dans un seul détecteur pouvant produire deux quadratures électriques.

Ainsi, le dispositif selon l'invention, que ce soit dans l'exemple de réalisation des figures 2 et 4 ou dans celui de la figure 5, permet un enregistrement numérique grand champ et grande résolution de l'amplitude complexe $A_s(x, y, z=z_D)$ dans un plan positionné entre l'objet DUT et le détecteur DET et en amont des moyens de filtrage lorsque ceux-ci sont mis en oeuvre. On peut alors calculer l'amplitude complexe $A_s(x,y,z)$ dans tout plan $\Pi(z)$ de l'espace libre compris entre l'objet et le détecteur. En effet, si l'on considère la propagation d'une onde plane de vecteur d'onde **k** d'un plan $\Pi_0(z=0)$ à un plan $\Pi(z)$, l'amplitude dans le plan $\Pi(z)$ peut être classiquement exprimée dans la limite des conditions de Fresnel comme un produit de convolution entre l'amplitude complexe dans le plan $\Pi_0$ et un propagateur $P(x,y,z_D)$ donné par:

$$P(x, y, z_D) = \exp\left( i \frac{k}{2z_D} (x^2 + y^2) \right) \qquad (5)$$

D'où, l'amplitude complexe de l'onde dans le plan n(z) s'écrit:

$$A_s(x, y, z_D) = \frac{\exp(ikz_D)}{i\lambda z_D} \Big( A_s(x, y, z_0) \otimes P(x, y, z_D) \Big) \qquad (6)$$

Ainsi, en prenant z=-D dans l'expression (6), où D est la distance entre l'objet DUT et le plan $\Pi_D$ de la figure 2, on obtient une image de l'objet, dite image 'contact'. Le dispositif selon l'invention peut ainsi par exemple être appliqué à un système de cartographie tridimensionnelle d'un objet comprenant en plus des moyens décrits précédemment, des moyens de calcul permettant de calculer à partir de l'amplitude complexe $(A_s(\mathbf{r},z_0))$ de l'onde signal issue de l'objet et mesurée sensiblement sur le plan du détecteur, l'amplitude complexe $A_s(\mathbf{r},z)$ de l'onde signal issue de l'objet en tout plan $\Pi(z)$ de l'espace libre compris entre l'objet et le détecteur et notamment à la frontière de l'objet, permettant ainsi une image contact de l'objet. A partir de ladite amplitude complexe, et connaissant l'onde d'illumination de l'objet, les coordonnées (x,y) des points de l'objet dans ledit plan $\Pi(z)$ qui sont à l'origine de la diffusion de l'onde d'illumination peuvent être déterminés, permettant d'établir la cartographie de l'objet.

Le dispositif selon l'invention permet ainsi de mesurer la phase de l'amplitude complexe $A_s(\mathbf{r},z)$ de l'onde signal issue de l'objet, ce qui donne une mesure directe de la distance selon l'axe zz'. Comme on mesure la phase à $2\pi$ près, le dispositif procure l'équivalent, pour la cote z, d'un vernier fin, capable de mesurer jusqu'à $\lambda/2$, où $\lambda$ est la longueur d'onde de la source laser permettant l'émission de l'onde WEM. Par ailleurs, la profondeur de champ de l'image reconstruite, de l'ordre du millimètre, constitue un vernier grossier. L'objet étant illuminé en réflexion, il est possible, selon l'invention, de créer un 'vernier moyen' permettant de lever les ambiguïtés sur la valeur de la phase et de ce fait, de lever les ambiguïtés de position, typiquement entre 10 à 100 microns. Pour cela, le dispositif d'holographie selon l'invention, quelles que soient les variantes de mise en oeuvre précédemment décrites, comprend en outre des moyens de balayage de la longueur d'onde de l'onde d'émission (WEM). En faisant varier la longueur d'onde pas à pas, typiquement avec un pas pouvant aller typiquement de $10^{-6}\lambda$ à $10^{-3}\lambda$, on peut alors, à partir des mesures de la phase obtenues pour chacune de ces longueurs d'onde, déterminer la valeur absolue de la phase recherchée.

Avantageusement, le dispositif selon l'invention comprend en outre des moyens pour moduler la fréquence optique du laser de manière à pouvoir couvrir tous les points de fréquence compris entre deux pas de balayage. Cette modulation a pour but de générer l'équivalent d'un vernier grossier, qui élimine toute ambiguïté, en brouillant les interférences qui se produisent pour une différence de chemin optique entre l'onde signal et l'onde de référence supérieur au pas du vernier moyen. Par exemple, pour un pas de fréquence d'émission de l'ordre de 20 GHz, on procède à une modulation de la fréquence optique en dents de scie de -10 à +10 GHz, en réalisant entre 10 à 100 dents de scie pendant l'acquisition de chaque image (soit pour une fréquence image à 25 Hz, une modulation entre 250 et 2500 Hz).

En pratique, lorsqu'on effectue un balayage pas à pas en fréquence optique du laser, on peut après l'acquisition d'un nombre donné de pas, effectuer une transformée de Fourier fréquence/temps pour chaque point de l'image mesuré en amplitude complexe reconstruite dans le plan de l'objet. Cette opération donne pour chaque temps t, l'image impulsionnelle de l'amplitude complexe dans le plan de l'objet, que l'on aurait obtenue à l'instant t en illuminant l'objet à l'instant 0 avec une impulsion laser pico- ou femtoseconde. On obtient ainsi la réponse de l'objet à une impulsion laser, sans avoir à mettre en oeuvre une source laser coûteuse comme une source laser femtoseconde, ni un détecteur rapide et coûteux, tel qu'une caméra à balayage de fente.

**Revendications**

1. Dispositif d'holographie numérique permettant de déterminer l'amplitude complexe ($A_s(\mathbf{r},z)$) d'une onde signal ($WS_2$) issue d'un objet (DUT) éclairé par une onde d'illumination ($WS_1$) connue, le dispositif comprenant des moyens de détection optoélectronique (DET, $D_1$, $D_2$) et étant caractérisé en ce qu'il comporte en outre:

   - des moyens (LAS, $AOM_1$, $AOM_2$) de génération de deux ondes cohérentes entre elles, l'onde ($WS_1$) d'illumination de l'objet, et une onde de référence (WREF) connue, les deux ondes présentant une différence de phase connue $\phi_i(t)$ fonction du temps,
   - des moyens (BS, CSP) pour faire interférer, sur les moyens de détection, l'onde (WREF) de référence et l'onde signal ($WS_2$) issue de l'objet, les moyens de détection permettant un échantillonnage temporel de la figure d'interférence résultant en l'acquisition d'un nombre N donné d'interférogrammes $I_i(\mathbf{r},t)$, N supérieur ou égal à 2, correspondant chacun à une différence de phase distincte entre l'onde signal et l'onde de référence incidentes sur lesdits moyens de détection,
   - des moyens de traitement permettant, à partir desdits inteférogrammes, de déterminer un hologramme numérique de l'objet correspondant à l'expression dans un plan $\Pi(z)$ donné de l'amplitude complexe $A_s(\mathbf{r},z)$ de l'onde signal issue de l'objet.

2. Dispositif selon la revendication 1, caractérisé en ce que les acquisitions sont effectuées pour au moins trois valeurs de la différence de phase entre l'onde signal et l'onde de référence, correspondant à trois interférogrammes $I_i(\mathbf{r},t)$, l'amplitude complexe ($A_s(\mathbf{r},z_0)$) de l'onde signal ($WS_2$) sur le plan du détecteur (DET) étant obtenue à partir d'une combinaison linéaire desdits interférogrammes.

3. Dispositif selon la revendication 2, caractérisé en ce que les acquisitions sont effectuées pour quatre valeurs de la différence de phase sensiblement égales à 0, $\pi/2$, $\pi$, $\pi/2$, correspondant respectivement à quatre interférogrammes, $I_1(\mathbf{r},t)$, $I_2(\mathbf{r},t)$, $I_3(\mathbf{r},t)$, $I_4(\mathbf{r},t)$, la partie en phase de l'amplitude complexe ($A_s(\mathbf{r},z_0)$) de l'onde signal ($WS_2$) avec l'onde de référence étant obtenue à partir de la différence $I_1(\mathbf{r},t)-I_3(\mathbf{r},t)$, la partie en quadrature étant obtenue à partir de la différence $I_4(\mathbf{r},t)-I_2(\mathbf{r},t)$.

4. Dispositif selon l'une des revendications précédentes, caractérisé en ce que les ondes de référence (WREF) et d'illumination ($WS_1$) présentent une différence de phase $\phi_i(t)$ variable par palier en fonction du temps, périodique, prenant successivement N valeurs distinctes.

**5.** Dispositif selon l'une des revendications 1 à 3, caractérisé en que les ondes de référence (WREF) et d'illumination (WS$_1$) présentent un décalage en fréquence (F$_0$), l'interférence entre l'onde de référence et l'onde signal (WS$_2$) issue de l'objet résultant en un interférogramme I($\mathbf{r}$,t) modulé en fonction du temps, présentant une modulation sinusoïdale à ladite fréquence de décalage.

**6.** Dispositif selon l'une des revendications 1 à 5, caractérisé en ce que les moyens de génération comprennent une source cohérente (LAS) émettant une onde d'émission (WEM) et deux modulateurs acousto-optiques (AOM$_1$, AOM$_2$) travaillant à des fréquences prédéterminées ($\Delta$f+F$_0$, $\Delta$f), sur des ordres de diffraction opposés, afin de former, à partir de ladite onde d'émission (WEM), l'onde d'illumination (WS$_1$) de l'objet et l'onde de référence (WREF).

**7.** Dispositif selon la revendication 6, caractérisé en ce que les ondes de référence et d'illumination présentent un décalage en fréquence (F$_0$),

- le premier modulateur acousto-optique (AOM$_1$) intercepte l'onde d'émission (WEM), transmet une partie de l'onde d'émission pour former l'onde d'illumination (WS$_1$) de l'objet et génère dans une direction donnée, une première onde décalée en fréquence par rapport à l'onde d'émission, d'une première variation de fréquence prédéterminée ($\Delta$f$_1$),
- le deuxième modulateur acousto-optique (AOM$_2$) intercepte ladite première onde décalée en fréquence et génère une deuxième onde décalée en fréquence par rapport à ladite première onde, d'une deuxième variation de fréquence ($\Delta$f$_2$) égale à la différence (F$_0$ - $\Delta$f$_1$) entre ladite fréquence de décalage (F$_0$) et la première variation de fréquence ($\Delta$f$_1$), l'onde résultante formant l'onde de référence (WREF) et présentant alors par rapport à l'onde d'illumination de l'objet un décalage en fréquence égal à ladite fréquence de décalage.

**8.** Dispositif selon l'une des revendications 1 à 5, caractérisé en ce que les moyens de génération comprennent deux sources laser indépendantes, verrouillées en phase par un asservissement électronique et permettant la génération des ondes d'illumination et de référence avec ladite différence de phase $\phi_i$(t) entre elles.

**9.** Dispositif selon l'une des revendications précédentes, caractérisé en ce que l'onde de référence (WREF) incidente sur le détecteur (DET) étant plane, de vecteur d'onde ($\mathbf{k}_0$) donné, et l'onde signal (WS$_2$) issue de l'objet et incidente sur le détecteur étant constituée d'une superposition d'ondes planes élémentaires caractérisées par leurs vecteurs d'onde ($\mathbf{k}$), il comporte en outre des moyens de filtrage (MF$_1$, MF$_2$) positionnés entre l'objet (DUT) et les moyens de détection (DET), permettant de sélectionner un ensemble desdites ondes planes élémentaires interférant avec l'onde de référence (WREF), les directions des vecteurs d'onde ($\mathbf{k}$) des ondes planes élémentaires sélectionnées étant comprises dans un cône d'ouverture prédéterminée, sensiblement centré sur la direction du vecteur d'onde ($\mathbf{k}_0$) de l'onde de référence, l'hologramme numérique ainsi obtenu étant un hologramme numérique élémentaire de l'objet (DUT) correspondant à un champ angulaire élémentaire de l'onde signal (WS$_2$) incidente sur les moyens de filtrage (MF$_1$, MF$_2$).

**10.** Dispositif selon la revendication 9, caractérisé en ce qu'il comporte en outre des moyens permettant de balayer un ensemble de champs angulaires élémentaires, résultant en un ensemble d'hologrammes numériques élémentaires dont la combinaison permet d'obtenir un hologramme numérique grand champ de l'objet (DUT).

**11.** Dispositif selon l'une des revendications 9 ou 10, caractérisé en ce que le champ angulaire élémentaire étant fixé, il comporte en outre des moyens permettant d'opérer une rotation apparente de l'objet (DUT) autour de la direction normale au plan du détecteur (DET), chaque position apparente de l'objet résultant en un hologramme numérique élémentaire, la combinaison desdits hologrammes élémentaires permettant d'obtenir un hologramme numérique grande résolution de l'objet (DUT).

**12.** Dispositif selon l'une des revendications précédentes, caractérisé en ce que les moyens de détection sont formés d'un détecteur (DET) comprenant un ensemble de détecteurs élémentaires et présentant un temps d'intégration (T$_{int}$) et une cadence d'acquisition (f$_{im}$) donnés, le détecteur intégrant lesdits interférogrammes I$_i$(r,t) pendant le temps d'intégration pour donner N interférogrammes moyennés I$_i$(r) à ladite cadence d'acquisition, correspondant à N valeurs distinctes de la différence de phase entre l'onde signal et l'onde de référence, les moyens de traitement permettant de calculer l'hologramme numérique de l'objet à partir desdits interférogrammes moyennés.

**13.** Dispositif selon la revendication 12, caractérisé en ce que l'objet étant sensiblement immobile, les ondes de référence et d'illumination présentent un décalage en fréquence (F$_0$), et ladite fréquence de décalage est sensiblement

égale au rapport ($\delta$f) entre ladite cadence d'acquisition ($f_{im}$) et le nombre N d'interférogrammes.

**14.** Dispositif selon la revendication 12, caractérisé en ce que l'objet présentant au moins une fréquence de vibration ($f_v$), les ondes de référence et d'illumination présentent un décalage en fréquence ($F_0$), et ladite fréquence de décalage est sensiblement égale à la somme entre ladite fréquence de vibration ($f_v$), ou l'une des harmoniques de ladite fréquence de vibration, et le rapport ($\delta$f) entre ladite cadence d'acquisition ($f_{im}$) et le nombre N d'interférogrammes.

**15.** Dispositif selon l'une des revendications 12 à 14, caractérisé en ce qu'il comprend en outre des moyens de filtrage ($MF_1$), comportant un trou de filtrage (SF) positionné dans le plan focal intermédiaire d'un dispositif afocal interceptant l'onde signal issue de l'objet et formé de deux objectifs ($O_1$, $O_2$), le trou (SF) étant sensiblement centré sur l'axe de l'objectif ($O_2$) situé en regard du détecteur, et comportant en outre des moyens permettant de déplacer solidairement, dans un plan perpendiculaire à la direction des axes des objectifs ($O_1$, $O_2$), le trou de filtrage (SF), l'objectif ($O_2$) situé en regard du détecteur (DET) et le détecteur.

**16.** Dispositif selon l'une des revendications 1 à 11, caractérisé en ce que les ondes de référence et d'illumination présentant un décalage en fréquence ($F_0$), les moyens de détection permettent une détection synchrone des interférogrammes $I_i(\mathbf{r},t)$ à une fréquence sensiblement égale à la fréquence de décalage ($F_0$), et en ce que les moyens de traitement permettant de déterminer l'hologramme numérique de l'objet, sont directement assurés par l'électronique desdits moyens de détection.

**17.** Dispositif selon l'une des revendications précédentes, caractérisé en ce que les moyens de génération comprenant une source laser d'émission d'une onde (WEM) permettant de former à partir de ladite onde d'émission (WEM), l'onde d'illumination ($WS_1$) de l'objet et l'onde de référence (WREF), l'objet est illuminé en réflexion, et le dispositif comprend en outre des moyens de balayage de la longueur d'onde de l'onde d'émission (WEM) permettant de lever les ambiguités sur la valeur absolue de la phase de l'amplitude compexe ($A_s(\mathbf{r},z_0)$) mesurée de l'onde signal ($WS_2$).

**18.** Système de cartographie tridimensionnelle d'un objet (DUT), comprenant un dispositif d'holographie numérique selon l'une des revendications précédentes, caractérisé en ce qu'il comprend en outre des moyens de calcul permettant de calculer

- à partir de l'amplitude complexe ($A_s(\mathbf{r},z_0)$) de l'onde signal issue de l'objet et mesurée sensiblement sur le plan du détecteur, l'amplitude complexe ($A_s(\mathbf{r},z)$) de l'onde signal issue de l'objet en tout plan ($\Pi(z)$) de l'espace libre compris entre l'objet et le détecteur et notamment à la frontière de l'objet,
- à partir de ladite amplitude complexe, et connaissant l'onde d'illumination de l'objet, les coordonnées (x,y) des points de l'objet dans ledit plan ($\Pi(z)$) qui sont à l'origine de la diffusion de l'onde d'illumination.

## FIG.1A

## FIG.1B

FIG.2

EP 1 043 632 A1

FIG.3A

FIG.3B

FIG.4

EP 1 043 632 A1

FIG.5

| | | Office européen des brevets | **RAPPORT DE RECHERCHE EUROPEENNE** | Numéro de la demande<br>EP 00 40 0899 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 805 316 A (SUZUKI YOSHIJI ET AL) 8 septembre 1998 (1998-09-08) * colonne 1, ligne 34 - colonne 2, ligne 10 * --- | 1-18 | G03H1/08 |
| A | US 4 639 139 A (PRETTYJOHNS KEITH N ET AL) 27 janvier 1987 (1987-01-27) * revendications 1-3 * --- | 1-18 | |
| A | US 5 736 958 A (TURPIN TERRY M) 7 avril 1998 (1998-04-07) * revendications * --- | 1-18 | |
| A | US 4 142 772 A (LURIE MICHAEL J) 6 mars 1979 (1979-03-06) * colonne 2, ligne 15 - ligne 41 * * colonne 6, ligne 9 - ligne 18 * ----- | 1-18 | |

**DOMAINES TECHNIQUES RECHERCHES (Int.Cl.7)**

G03H

Le présent rapport a été établi pour toutes les revendications

| Lieu de la recherche | Date d'achèvement de la recherche | Examinateur |
|---|---|---|
| LA HAYE | 13 juillet 2000 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 00 40 0899

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-07-2000

| Document brevet cité au rapport de recherche | Date de publication | Membre(s) de la famille de brevet(s) | Date de publication |
|---|---|---|---|
| US 5805316 A | 08-09-1998 | JP 9185314 A | 15-07-1997 |
| US 4639139 A | 27-01-1987 | AUCUN | |
| US 5736958 A | 07-04-1998 | US 5079555 A | 07-01-1992 |
| | | US 5751243 A | 12-05-1998 |
| | | EP 0617797 A | 05-10-1994 |
| | | JP 7502610 T | 16-03-1995 |
| | | US 5384573 A | 24-01-1995 |
| | | WO 9313432 A | 08-07-1993 |
| | | CA 2058209 A,C | 26-05-1993 |
| | | EP 0543064 A | 26-05-1993 |
| | | JP 7012937 A | 17-01-1995 |
| US 4142772 A | 06-03-1979 | AUCUN | |